# EUROPEAN PATENT APPLICATION

(11) **EP 4 530 070 A1**
(43) Date of publication of application: **02.04.2025**
(21) Application number: 24197974.9
(22) Date of filing: 02.09.2024
(51) Int. Cl.: B33Y 70/00, B23K 35/30, C22C 1/04, C22C 19/05, F01D 5/00

(54) **ALLOY COMPOSITIONS AND ARTICLES FORMED OF SUCH COMPOSITIONS**

(30) Priority: 26.09.2023 US 202318474645
(71) Applicant: General Electric Technology GmbH, 5400 Baden (CH)
(72) Inventor: CUI, Yan, Greenville, 29615 (US); LAYLOCK, Matthew Joseph, Greenville, 29615 (US); ARNETT, Michael Douglas, Greenville, 29615 (US); SCHAEFFER, Jon C., Greenville, 29615 (US); TOLLISON, Brian Lee, Greenville, 29615 (US)
(74) Representative: Openshaw & Co.

(57) **Abstract**

Described herein are compositions, and more particularly to alloy compositions, methods of using the alloy compositions, and articles formed from with the alloy compositions. The alloy compositions are broadly applicable in applications requiring superalloys, including welding processes, additive manufacturing processes, metal casting processes, coating processes, repairing processes, powder metallurgy, and/or combinations thereof.

## Description

### BACKGROUND

The field of the disclosure relates generally to compositions, and more particularly to alloy compositions, methods of using the alloy compositions, and articles formed from the alloy compositions. The alloy compositions are broadly applicable in applications requiring superalloys, including welding processes, additive manufacturing processes, metal casting processes, coating processes, repairing processes, powder metallurgy, and/or combinations thereof.

Nickel-based superalloys conventionally include relatively easy-to-weld superalloys with lower aluminum content, and hard-to-weld superalloys with higher aluminum content. Applications of hard-to-weld superalloys are limited due to the poor weldability characteristics.

Nickel-based superalloys are described in U.S. Patent Publication No. 2016/0326613, which describes an alloy that has a lower Al content and that shows a good weldability. However, the alloy system is intended to possess low Al content, which may limit other properties.

Nickel-based superalloys are also described in U.S. Patent No. 10,640,849, which describes an alloy that has a higher Al content and that shows a good weldability. However, the alloy system is simple. To improve the properties of this alloy, more elements should be added in the alloy system.

Accordingly, there is a need for nickel-based superalloys that obtain good weldability and comprehensive mechanical properties and corrosion and oxidization resistance at elevated temperatures.

### BRIEF DESCRIPTION

In one aspect, a composition is provided. The composition includes from about 16 wt% to about 21 wt% chromium, from about 3.5 wt% to about 6.0 wt% aluminum, from about 0.5 wt% to about 1.95 wt% iron, from about 9 wt% to about 12 wt% cobalt, from about 0.5 wt% to about 1.5 wt% molybdenum, from about 0.03 wt% to about 0.18 wt% carbon, from about 0.5 wt% to about 1.5 wt% titanium, from about 0.5 wt% to about 2.5 wt% tungsten, from about 1.0 wt% to about 3.5 wt% niobium, less than about 0.25 wt% hafnium, and balance nickel and incidental impurities.

In another aspect, a method of using a composition is provided. The composition includes from about 16 wt% to about 21 wt% chromium, from about 3.5 wt% to about 6.0 wt% aluminum, from about 0.5 wt% to about 1.95 wt% iron, from about 9 wt% to about 12 wt% cobalt, from about 0.5 wt% to about 1.5 wt% molybdenum, from about 0.03 wt% to about 0.18 wt% carbon, from about 0.5 wt% to about 1.5 wt% titanium, from about 0.5 wt% to about 2.5 wt% tungsten, from about 1.0 wt% to about 3.5 wt% niobium, less than about 0.25 wt% hafnium, and balance nickel and incidental impurities. The method includes using the composition for a purpose selected from welding, additive manufacturing, metal casting, coating, repairing, powder metallurgy, and combinations thereof.

In still another aspect, an article including a composition is provided. The composition includes from about 16 wt% to about 21 wt% chromium, from about 3.5 wt% to about 6.0 wt% aluminum, from about 0.5 wt% to about 1.95 wt% iron, from about 9 wt% to about 12 wt% cobalt, from about 0.5 wt% to about 1.5 wt% molybdenum, from about 0.03 wt% to about 0.18 wt% carbon, from about 0.5 wt% to about 1.5 wt% titanium, from about 0.5 wt% to about 2.5 wt% tungsten, from about 1.0 wt% to about 3.5 wt% niobium, less than about 0.25 wt% hafnium, and balance nickel and incidental impurities.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is an exemplary phase diagram of a composition in accordance with the present disclosure.
FIG. 2 depicts exemplary results of a metallurgical evaluation of a composition in accordance with the present disclosure.
FIG. 3 depicts exemplary results of a welding test with a composition in accordance with the present disclosure.

### DETAILED DESCRIPTION

It was surprisingly discovered in the present disclosure that compositions according to the present disclosure could be used for welding. The compositions include altered elemental content for Al, Fe, and Nb compared to other alloy compositions. The compositions exhibit excellent weldability characteristics, excellent castability properties, excellent oxidization resistance due to higher aluminum content, good mechanical properties, high gamma prime volume fractions, and high gamma prime solvus temperatures. Compositions according to the present disclosure are broadly applicable in applications requiring superalloys, including, but not limited to, welding, additive manufacturing, metal casting, coating, repairing, powder metallurgy, and combinations thereof.

The embodiments described herein overcome at least some of the disadvantages of known nickel-based superalloys. The exemplary embodiments described herein include a composition. The composition includes from about 16 wt% to about 21 wt% chromium, from about 3.5 wt% to about 6.0 wt% aluminum, from about 0.5 wt% to about 1.95 wt% iron, from about 9 wt% to about 12 wt% cobalt, from about 0.5 wt% to about 1.5 wt% molybdenum, from about 0.03 wt% to about 0.18 wt% carbon, from about 0.5 wt% to about 1.5 wt% titanium, from about 0.5 wt% to about 2.5 wt% tungsten, from about 1.0 wt% to about 3.5 wt% niobium, less than about 0.25 wt% hafnium, and balance nickel and incidental impurities

In some embodiments, the composition may include any suitable amount of chromium (Cr) that facilitates the composition described herein. In some embodiments, the composition includes Cr. In some embodiments, the composition includes from about 16 wt% to about 21 wt% chromium.

In some embodiments, the composition includes at least about 16.0 wt% Cr, at least about 16.1 wt% Cr, at least about 16.2 wt% Cr, at least about 16.3 wt% Cr, at least about 16.4 wt% Cr, at least about 16.5 wt% Cr, at least about 16.6 wt% Cr, at least about 16.7 wt% Cr, at least about 16.8 wt% Cr, at least about 16.9 wt% Cr, at least about 17.0 wt% Cr, at least about 17.1 wt% Cr, at least about 17.2 wt% Cr, at least about 17.3 wt% Cr, at least about 17.4 wt% Cr, at least about 17.5 wt% Cr, at least about 17.6 wt% Cr, at least about 17.7 wt% Cr, at least about 17.8 wt% Cr, at least about 17.9 wt% Cr, at least about 18.0 wt% Cr, at least about 18.1 wt% Cr, at least about 18.2 wt% Cr, at least about 18.3 wt% Cr, at least about 18.4 wt% Cr, at least about 18.5 wt% Cr, at least about 18.6 wt% Cr, at least about 18.7 wt% Cr, at least about 18.8 wt% Cr, at least about 18.9 wt% Cr, at least about 19.0 wt% Cr, at least about 19.1 wt% Cr, at least about 19.2 wt% Cr, at least about 19.3 wt% Cr, at least about 19.4 wt% Cr, at least about 19.5 wt% Cr, at least about 19.6 wt% Cr, at least about 19.7 wt% Cr, at least about 19.8 wt% Cr, or at least about 19.9 wt% Cr, at least about 20.1 wt% Cr, at least about 20.2 wt% Cr, at least about 20.3 wt% Cr, at least about 20.4 wt% Cr, at least about 20.5 wt% Cr, at least about 20.6 wt% Cr, at least about 20.7 wt% Cr, at least about 20.8 wt% Cr, or at least about 20.9 wt% Cr. In some embodiments, the composition includes at most about 16.1 wt% Cr, at most about 16.2 wt% Cr, at most about 16.3 wt% Cr, at most about 16.4 wt% Cr, at most about 16.5 wt% Cr, at most about 16.6 wt% Cr, at most about 16.7 wt% Cr, at most about 16.8 wt% Cr, at most about 16.9 wt% Cr, at most about 17.0 wt% Cr, at most about 17.1 wt% Cr, at most about 17.2 wt% Cr, at most about 17.3 wt% Cr, at most about 17.4 wt% Cr, at most about 17.5 wt% Cr, at most about 17.6 wt% Cr, at most about 17.7 wt% Cr, at most about 17.8 wt% Cr, at most about 17.9 wt% Cr, at most about 18.0 wt% Cr, at most about 18.1 wt% Cr, at most about 18.2 wt% Cr, at most about 18.3 wt% Cr, at most about 18.4 wt% Cr, at most about 18.5 wt% Cr, at most about 18.6 wt% Cr, at most about 18.7 wt% Cr, at most about 18.8 wt% Cr, at most about 18.9 wt% Cr, at most about 19.0 wt% Cr, at most about 19.1 wt% Cr, at most about 19.2 wt% Cr, at most about 19.3 wt% Cr, at most about 19.4 wt% Cr, at most about 19.5 wt% Cr, at most about 19.6 wt% Cr, at most about 19.7 wt% Cr, at most about 19.8 wt% Cr, at most about 19.9 wt% Cr, at most about 20.0 wt% Cr, at most about 20.1 wt% Cr, at most about 20.2 wt% Cr, at most about 20.3 wt% Cr, at most about 20.4 wt% Cr, at most about 20.5 wt% Cr, at most about 20.6 wt% Cr, at most about 20.7 wt% Cr, at most about 20.8 wt% Cr, at most about 20.9 wt% Cr, or at most about 21.0 wt% Cr.

In some embodiments, the composition may include any suitable amount of aluminum (Al) that facilitates the composition described herein. In some embodiments, the composition includes from about 3.5 wt% to about 6.0 wt% aluminum. In some embodiments, the composition includes from about 4.0 wt% to about 5.0 wt% aluminum.

In some embodiments, the composition includes at least about 3.5 wt% Al, at least about 3.6 wt% Al, at least about 3.7 wt% Al, at least about 3.8 wt% Al, at least about 3.9 wt% Al, at least about 4.0 wt% Al, at least about 4.1 wt% Al, at least about 4.2 wt% Al, at least about 4.3 wt% Al, at least about 4.4 wt% Al, at least about 4.5 wt% Al, at least about 4.6 wt% Al, at least about 4.7 wt% Al, at least about 4.8 wt% Al, at least about 4.9 wt% Al, at least about 5.0 wt% Al, at least about 5.1 wt% Al, at least about 5.2 wt% Al, at least about 5.3 wt% Al, at least about 5.4 wt% Al, at least about 5.5 wt% Al, at least about 5.6 wt% Al, at least about 5.7 wt% Al, at least about 5.8 wt% Al, or at least about 5.9 wt% Al. In some embodiments, the composition includes at most about 3.6 wt% Al, at most about 3.7 wt% Al, at most about 3.8 wt% Al, at most about 3.9 wt% Al, at most about 4.0 wt% Al, at most about 4.1 wt% Al, at most about 4.2 wt% Al, at most about 4.3 wt% Al, at most about 4.4 wt% Al, at most about 4.5 wt% Al, at most about 4.6 wt% Al, at most about 4.7 wt% Al, at most about 4.8 wt% Al, at most about 4.9 wt% Al, at most about 5.0 wt% Al, at most about 5.1 wt% Al, at most about 5.2 wt% Al, at most about 5.3 wt% Al, at most about 5.4 wt% Al, at most about 5.5 wt% Al, at most about 5.6 wt% Al, at most about 5.7 wt% Al, at most about 5.8 wt% Al, at most about 5.9 wt% Al, or at most about 6.0 wt% Al.

In some embodiments, the composition may include any suitable amount of iron (Fe) that facilitates the composition described herein. In some embodiments, the composition includes from about 0.5 wt% to about 1.95 wt% iron.

In some embodiments, the composition includes at least about 0.50 wt% Fe, at least about 0.55 wt% Fe, at least about 0.60 wt% Fe, at least about 0.65 wt% Fe, at least about 0.70 wt% Fe, at least about 0.75 wt% Fe, at least about 0.80 wt% Fe, at least about 0.85 wt% Fe, at least about 0.90 wt% Fe, at least about 0.95 wt% Fe, at least about 1.0 wt% Fe, at least about 1.05 wt% Fe, at least about 1.1 wt% Fe, at least about 1.15 wt% Fe, at least about 1.2 wt% Fe, at least about 1.25 wt% Fe, at least about 1.3 wt% Fe, at least about 1.35 wt% Fe, at least about 1.4 wt% Fe, at least about 1.45 wt% Fe, at least about 1.5 wt% Fe, at least about 1.55 wt% Fe, at least about 1.6 wt% Fe, at least about 1.65 wt% Fe, at least about 1.7 wt% Fe, at least about 1.75 wt% Fe, at least about 1.8 wt% Fe, at least about 1.85 wt% Fe, or at least about 1.9 wt% Fe. In some embodiments, the composition includes at most about 0.55 wt% Fe, at most about 0.60 wt% Fe, at most about 0.65 wt% Fe, at most about 0.70 wt% Fe, at most about 0.75 wt% Fe, at most about 0.80 wt% Fe, at most about 0.85 wt% Fe, at most about 0.90 wt% Fe, at most about 0.95 wt% Fe, at most about 1.0 wt% Fe, at most about 1.05 wt% Fe, at most about 1.1 wt% Fe, at most about 1.15 wt% Fe, at most about 1.2 wt% Fe, at most about 1.25 wt% Fe, at most about 1.3 wt% Fe, at most about 1.35 wt% Fe, at most about 1.4 wt% Fe, at most about 1.45 wt% Fe, at most about 1.5 wt% Fe, at most about 1.55 wt% Fe, at most about 1.6 wt% Fe, at most about 1.65 wt% Fe, at most about 1.7 wt% Fe, at most about 1.75 wt% Fe, at most about 1.8 wt% Fe, at most about 1.85 wt% Fe, at most about 1.9 wt% Fe, or at most about 1.95 wt% Fe.

In some embodiments, the composition may include any suitable amount of cobalt (Co) that facilitates the composition described herein. In some embodiments, the composition includes from about 9 wt% to about 12 wt% cobalt.

In some embodiments, the composition includes at least about 9.0 wt% Co, at least about 9.1 wt% Co, at least about 9.2 wt% Co, at least about 9.3 wt% Co, at least about 9.4 wt% Co, at least about 9.5 wt% Co, at least about 9.6 wt% Co, at least about 9.7 wt% Co, at least about 9.8 wt% Co, at least about 9.9 wt% Co, at least about 10.0 wt% Co, at least about 10.1 wt% Co, at least about 10.2 wt% Co, at least about 10.3 wt% Co, at least about 10.4 wt% Co, at least about 10.5 wt% Co, at least about 10.6 wt% Co, at least about 10.7 wt% Co, at least about 10.8 wt% Co, at least about 10.9 wt% Co, at least about 11.0 wt% Co, at least about 11.1 wt% Co, at least about 11.2 wt% Co, at least about 11.3 wt% Co, at least about 11.4 wt% Co, at least about 11.5 wt% Co, at least about 11.6 wt% Co, at least about 11.7 wt% Co, at least about 11.8 wt% Co, or at least about 11.9 wt% Co. In some embodiments, the composition includes at most about 9.1 wt% Co, at most about 9.2 wt% Co, at most about 9.3 wt% Co, at most about 9.4 wt% Co, at most about 9.5 wt% Co, at most about 9.6 wt% Co, at most about 9.7 wt% Co, at most about 9.8 wt% Co, at most about 9.9 wt% Co, at most about 10.0 wt% Co, at most about 10.1 wt% Co, at most about 10.2 wt% Co, at most about 10.3 wt% Co, at most about 10.4 wt% Co, at most about 10.5 wt% Co, at most about 10.6 wt% Co, at most about 10.7 wt% Co, at most about 10.8 wt% Co, at most about 10.9 wt% Co, at most about 11.0 wt% Co, at most about 11.1 wt% Co, at most about 11.2 wt% Co, at most about 11.3 wt% Co, at most about 11.4 wt% Co, at most about 11.5 wt% Co, at most about 11.6 wt% Co, at most about 11.7 wt% Co, at most about 11.8 wt% Co, at most about 11.9 wt% Co, or at most about 12.0 wt% Co.

In some embodiments, the composition may include any suitable amount of molybdenum (Mo) that facilitates the composition described herein. In some embodiments, the composition includes from about 0.5 wt% to about 1.5 wt% molybdenum.

In some embodiments, the composition includes at least about 0.50 wt% Mo, at least about 0.55 wt% Mo, at least about 0.60 wt% Mo, at least about 0.65 wt% Mo, at least about 0.70 wt% Mo, at least about 0.75 wt% Mo, at least about 0.80 wt% Mo, at least about 0.85 wt% Mo, at least about 0.90 wt% Mo, at least about 0.95 wt% Mo, at least about 1.0 wt% Mo, at least about 1.05 wt% Mo, at least about 1.1 wt% Mo, at least about 1.15 wt% Mo, at least about 1.2 wt% Mo, at least about 1.25 wt% Mo, at least about 1.3 wt% Mo, at least about 1.35 wt% Mo, at least about 1.4 wt% Mo, or at least about 1.45 wt% Mo. In some embodiments, the composition includes at most about 0.55 wt% Mo, at most about 0.60 wt% Mo, at most about 0.65 wt% Mo, at most about 0.70 wt% Mo, at most about 0.75 wt% Mo, at most about 0.80 wt% Mo, at most about 0.85 wt% Mo, at most about 0.90 wt% Mo, at most about 0.95 wt% Mo, at most about 1.0 wt% Mo, at most about 1.05 wt% Mo, at most about 1.1 wt% Mo, at most about 1.15 wt% Mo, at most about 1.2 wt% Mo, at most about 1.25 wt% Mo, at most about 1.3 wt% Mo, at most about 1.35 wt% Mo, at most about 1.4 wt% Mo, at most about 1.45 wt% Mo, or at most about 1.5 wt% Mo.

In some embodiments, the composition may include any suitable amount of carbon (C) that facilitates the composition described herein. In some embodiments, the composition includes from about 0.03 wt% to about 0.18 wt% carbon.

In some embodiments, the composition includes at least about 0.03 wt% C, at least about 0.04 wt% C, at least about 0.05 wt% C, at least about 0.06 wt% C, at least about 0.07 wt% C, at least about 0.08 wt% C, at least about 0.09 wt% C, at least about 0.10 wt% C, at least about 0.11 wt% C, at least about 0.12 wt% C, at least about 0.13 wt% C, at least about 0.14 wt% C, at least about 0.15 wt% C, at least about 0.16 wt% C, or at least about 0.17 wt% C. In some embodiments, the composition includes at most about 0.04 wt% C, at most about 0.05 wt% C, at most about 0.06 wt% C, at most about 0.07 wt% C, at most about 0.08 wt% C, at most about 0.09 wt% C, at most about 0.10 wt% C, at most about 0.11 wt% C, at most about 0.12 wt% C, at most about 0.13 wt% C, at most about 0.14 wt% C, at most about 0.15 wt% C, at most about 0.16 wt% C, at most about 0.17 wt% C, or at most about 0.18 wt% C.

In some embodiments, the composition may include any suitable amount of titanium (Ti) that facilitates the composition described herein. In some embodiments, the composition includes from about 0.50 wt% to about 1.5 wt% Ti.

In some embodiments, the composition includes at least about 0.50 wt% Ti, at least about 0.55 wt% Ti, at least about 0.60 wt% Ti, at least about 0.65 wt% Ti, at least about 0.70 wt% Ti, at least about 0.75 wt% Ti, at least about 0.80 wt% Ti, at least about 0.85 wt% Ti, at least about 0.90 wt% Ti, at least about 0.95 wt% Ti, at least about 1.0 wt% Ti, at least about 1.05 wt% Ti, at least about 1.1 wt% Ti, at least about 1.15 wt% Ti, at least about 1.2 wt% Ti, at least about 1.25 wt% Ti, at least about 1.3 wt% Ti, at least about 1.35 wt% Ti, at least about 1.4 wt% Ti, or at least about 1.45 wt% Ti. In some embodiments, the composition includes at most about 0.55 wt% Ti, at most about 0.60 wt% Ti, at most about 0.65 wt% Ti, at most about 0.70 wt% Ti, at most about 0.75 wt% Ti, at most about 0.80 wt% Ti, at most about 0.85 wt% Ti, at most about 0.90 wt% Ti, at most about 0.95 wt% Ti, at most about 1.0 wt% Ti, at most about 1.05 wt% Ti, at most about 1.1 wt% Ti, at most about 1.15 wt% Ti, at most about 1.2 wt% Ti, at most about 1.25 wt% Ti, at most about 1.3 wt% Ti, at most about 1.35 wt% Ti, at most about 1.4 wt% Ti, at most about 1.45 wt% Ti, or at most about 1.5 wt% Ti.

In some embodiments, the composition may include any suitable amount of tungsten (W) that facilitates the composition described herein. In some embodiments, the composition includes from about 0.50 wt% to about 2.5 wt% W.

In some embodiments, the composition includes at least about 0.50 wt% W, at least about 0.55 wt% W, at least about 0.60 wt% W, at least about 0.65 wt% W, at least about 0.70 wt% W, at least about 0.75 wt% W, at least about 0.80 wt% W, at least about 0.85 wt% W, at least about 0.90 wt% W, at least about 0.95 wt% W, at least about 1.0 wt% W, at least about 1.05 wt% W, at least about 1.1 wt% W, at least about 1.15 wt% W, at least about 1.2 wt% W, at least about 1.25 wt% W, at least about 1.3 wt% W, at least about 1.35 wt% W, at least about 1.4 wt% W, at least about 1.45 wt% W, at least about 1.50 wt% W, at least about 1.55 wt% W, at least about 1.60 wt% W, at least about 1.65 wt% W, at least about 1.70 wt% W, at least about 1.75 wt% W, at least about 1.80 wt% W, at least about 1.85 wt% W, at least about 1.90 wt% W, at least about 1.95 wt% W, at least about 2.0 wt% W, at least about 2.05 wt% W, at least about 2.10 wt% W, at least about 2.15 wt% W, at least about 2.2 wt% W, at least about 2.25 wt% W, at least about 2.3 wt% W, at least about 2.35 wt% W, at least about 2.4 wt% W, or at least about 2.45 wt% W. In some embodiments, the composition includes at most about 0.55 wt% W, at most about 0.60 wt% W, at most about 0.65 wt% W, at most about 0.70 wt% W, at most about 0.75 wt% W, at most about 0.80 wt% W, at most about 0.85 wt% W, at most about 0.90 wt% W, at most about 0.95 wt% W, at most about 1.0 wt% W, at most about 1.05 wt% W, at most about 1.1 wt% W, at most about 1.15 wt% W, at most about 1.2 wt% W, at most about 1.25 wt% W, at most about 1.3 wt% W, at most about 1.35 wt% W, at most about 1.4 wt% W, at most about 1.45 wt% W, at most about 1.50 wt% W, at most about 1.55 wt% W, at most about 1.60 wt% W, at most about 1.65 wt% W, at most about 1.70 wt% W, at most about 1.75 wt% W, at most about 1.80 wt% W, at most about 1.85 wt% W, at most about 1.90 wt% W, at most about 1.95 wt% W, at most about 2.0 wt% W, at most about 2.05 wt% W, at most about 2.10 wt% W, at most about 2.15 wt% W, at most about 2.2 wt% W, at most about 2.25 wt% W, at most about 2.3 wt% W, at most about 2.35 wt% W, at most about 2.4 wt% W, at most about 2.45 wt% W, or at most about 2.5 wt% W.

In some embodiments, the composition may include any suitable amount of niobium (Nb) that facilitates the composition described herein. In some embodiments, the composition includes from about 1.0 wt% to about 3.5 wt% Nb.

In some embodiments, the composition includes at least about 1.0 wt% Nb, at least about 1.05 wt% Nb, at least about 1.1 wt% Nb, at least about 1.15 wt% Nb, at least about 1.2 wt% Nb, at least about 1.25 wt% Nb, at least about 1.3 wt% Nb, at least about 1.35 wt% Nb, at least about 1.4 wt% Nb, at least about 1.45 wt% Nb, at least about 1.50 wt% Nb, at least about 1.55 wt% Nb, at least about 1.60 wt% Nb, at least about 1.65 wt% Nb, at least about 1.70 wt% Nb, at least about 1.75 wt% Nb, at least about 1.80 wt% Nb, at least about 1.85 wt% Nb, at least about 1.90 wt% Nb, at least about 1.95 wt% Nb, at least about 2.0 wt% Nb, at least about 2.05 wt% Nb, at least about 2.10 wt% Nb, at least about 2.15 wt% Nb, at least about 2.2 wt% Nb, at least about 2.25 wt% Nb, at least about 2.3 wt% Nb, at least about 2.35 wt% Nb, at least about 2.4 wt% Nb, at least about 2.45 wt% Nb, at least about 2.50 wt% Nb, at least about 2.55 wt% Nb, at least about 2.60 wt% Nb, at least about 2.65 wt% Nb, at least about 2.70 wt% Nb, at least about 2.75 wt% Nb, at least about 2.80 wt% Nb, at least about 2.85 wt% Nb, at least about 2.90 wt% Nb, at least about 2.95 wt% Nb, at least about 3.0 wt% Nb, at least about 3.05 wt% Nb, at least about 3.10 wt% Nb, at least about 3.15 wt% Nb, at least about 3.2 wt% Nb, at least about 3.25 wt% Nb, at least about 3.3 wt% Nb, at least about 3.35 wt% Nb, at least about 3.4 wt% Nb, or at least about 3.45 wt% Nb. In some embodiments, the composition includes at most about 1.05 wt% Nb, at most about 1.1 wt% Nb, at most about 1.15 wt% Nb, at most about 1.2 wt% Nb, at most about 1.25 wt% Nb, at most about 1.3 wt% Nb, at most about 1.35 wt% Nb, at most about 1.4 wt% Nb, at most about 1.45 wt% Nb, at most about 1.50 wt% Nb, at most about 1.55 wt% Nb, at most about 1.60 wt% Nb, at most about 1.65 wt% Nb, at most about 1.70 wt% Nb, at most about 1.75 wt% Nb, at most about 1.80 wt% Nb, at most about 1.85 wt% Nb, at most about 1.90 wt% Nb, at most about 1.95 wt% Nb, at most about 2.0 wt% Nb, at most about 2.05 wt% Nb, at most about 2.10 wt% Nb, at most about 2.15 wt% Nb, at most about 2.2 wt% Nb, at most about 2.25 wt% Nb, at most about 2.3 wt% Nb, at most about 2.35 wt% Nb, at most about 2.4 wt% Nb, at most about 2.45 wt% Nb, at most about 2.50 wt% Nb, at most about 2.55 wt% Nb, at most about 2.60 wt% Nb, at most about 2.65 wt% Nb, at most about 2.70 wt% Nb, at most about 2.75 wt% Nb, at most about 2.80 wt% Nb, at most about 2.85 wt% Nb, at most about 2.90 wt% Nb, at most about 2.95 wt% Nb, at most about 3.0 wt% Nb, at most about 3.05 wt% Nb, at most about 3.10 wt% Nb, at most about 3.15 wt% Nb, at most about 3.2 wt% Nb, at most about 3.25 wt% Nb, at most about 3.3 wt% Nb, at most about 3.35 wt% Nb, at most about 3.4 wt% Nb, at most about 3.45 wt% Nb, or at most about 3.5 wt% Nb.

In some embodiments, the composition may include any suitable amount of hafnium (Hf) that facilitates the composition described herein. In some embodiments, the composition does not include Hf. In some embodiments, the composition includes less than about 0.25 wt% Hf.

In some embodiments, the composition includes at least about 0.01 wt% Hf, at least about 0.05 wt% Hf, at least about 0.10 wt% Hf, at least about 0.15 wt% Hf, or at least about 0.20 wt% Hf. In some embodiments, the composition includes at most about 0.05 wt% Hf, at most about 0.10 wt% Hf, at most about 0.15 wt% Hf, at most about 0.20 wt% Hf, or at most about 0.24 wt% Hf.

In some embodiments, the composition may include any suitable amount of nickel (Ni) that facilitates the composition described herein. In many embodiments, the composition includes balance nickel. In these embodiments, the amount of nickel is sufficient to bring the total weight percent of the composition to 100 wt%.

In some embodiments, the composition includes at least about at least about 49 wt% Ni, at least about 50 wt% Ni, at least about 51 wt% Ni, at least about 52 wt% Ni, at least about 53 wt% Ni, at least about 54 wt% Ni, at least about 55 wt% Ni, at least about 56 wt% Ni, at least about 57 wt% Ni, at least about 58 wt% Ni, at least about 59 wt% Ni, at least about 60 wt% Ni, at least about 61 wt% Ni, at least about 62 wt% Ni, at least about 63 wt% Ni, at least about 64 wt% Ni, at least about 65 wt% Ni, at least about 66 wt% Ni, at least about 67 wt% Ni, at least about 68 wt% Ni, or at least about 69 wt% Ni. In some embodiments, the composition includes at most about 50 wt% Ni, at most about 51 wt% Ni, at most about 52 wt% Ni, at most about 53 wt% Ni, at most about 54 wt% Ni, at most about 55 wt% Ni, at most about 56 wt% Ni, at most about 57 wt% Ni, at most about 58 wt% Ni, at most about 59 wt% Ni, at most about 60 wt% Ni, at most about 61 wt% Ni, at most about 62 wt% Ni, at most about 63 wt% Ni, at most about 64 wt% Ni, at most about 65 wt% Ni, at most about 67 wt% Ni, at most about 68 wt% Ni, or at most about 69 wt% Ni.

Generally, the composition may include impurities that do not substantially alter the material properties of the composition. In some embodiments, the composition also includes elemental impurities. In some embodiments, the composition also includes incidental impurities.

In some embodiments, the composition includes balance nickel and incidental impurities. In these embodiments, the amount of nickel and incidental impurities is sufficient to bring the total weight percent of the composition to 100 wt%.

In some embodiments, the composition is an alloy composition. In some embodiments, the composition is a superalloy composition.

In some embodiments, the composition may have a gamma prime solvus temperature that facilitates the use of the composition described herein. In some embodiments, the composition has a gamma prime solvus temperature of from about 1700 °F to about 2100 °F. In some embodiments, the composition has a gamma prime solvus temperature of from about 1900 °F to about 2050 °F.

In some embodiments, the composition has a gamma prime solvus temperature of at least about 1700 °F, at least about 1750 °F, at least about 1800 °F, at least about 1850 °F, at least about 1900 °F, at least about 1950 °F, at least about 2000 °F, or at least about 2050 °F. In some embodiments, the composition has a gamma prime solvus temperature of at most about 1750 °F, at most about 1800 °F, at most about 1850 °F, at most about 1900 °F, at most about 1950 °F, at most about 2000 °F, at most about 2050 °F, or at most about 2100 °F.

In some embodiments, the composition may have a gamma prime solvus temperature that facilitates the use of the composition described herein. In some embodiments, the composition has a gamma prime volume fraction of from about 40% to about 75%. In some embodiments, the composition has a gamma prime volume fraction of from about 45% to about 70%.

In some embodiments, the composition has a gamma prime volume fraction of at least about 40%, at least about 45%, at least about 50%, at least about 55%, at least about 60%, at least about 65%, or at least about 70%. In some embodiments, the composition has a gamma prime volume fraction of at most about 45%, at most about 50%, at most about 55%, at most about 60%, at most about 65%, at most about 70%, or at most about 75%.

Generally, the composition may be used according to any suitable purpose known in the art that facilitates the use of the composition described herein. In some embodiments, the composition is a welding composition, an additive manufacturing composition, a metal casting composition, a coating composition, and/or a repair composition. In some embodiments, the composition is used in a welding composition, an additive manufacturing composition, a metal casting composition, a coating composition, a powder metallurgy composition, and/or a repair composition.

Described herein is also a method of using the composition, wherein the method includes using the composition for any of, but not limited to, welding, additive manufacturing, metal casting, coating, repairing, powder metallurgy, and combinations thereof.

Also described herein is an article including the composition. Generally, the composition may be included in any suitable article known in the art that facilitates the use of the composition described herein. In some embodiments, the article is produced using, but not limited to only using, a welding process, an additive manufacturing process, a metal casting process, a coating process, a repair process, powder metallurgy, and combinations thereof.

In some embodiments, the article is a blade for a gas turbine or a squealer tip of a blade of a gas turbine. In some embodiments, the article is a component of a gas turbine such as, but not limited to only being, a nozzle, a shroud, a diaphragm, a combustor component, and/or a combination thereof.

Further aspects of the present disclosure are provided by the subject matter of the following clauses:
1. A composition comprising:
   from about 16 wt% to about 21 wt% chromium;
   from about 3.5 wt% to about 6.0 wt% aluminum;
   from about 0.5 wt% to about 1.95 wt% iron;
   from about 9 wt% to about 12 wt% cobalt;
   from about 0.5 wt% to about 1.5 wt% molybdenum;
   from about 0.03 wt% to about 0.18 wt% carbon;
   from about 0.5 wt% to about 1.5 wt% titanium;
   from about 0.5 wt% to about 2.5 wt% tungsten;
   from about 1.0 wt% to about 3.5 wt% niobium;
   less than about 0.25 wt% hafnium; and
   balance nickel and incidental impurities.
2. The composition according to the preceding clause, wherein the composition comprises from about 4.0 wt% to about 5.0 wt% aluminum.
3. The composition according to any preceding clause, wherein the composition comprises from about 1.0 wt% to about 1.75 wt% iron.
4. The composition according to any preceding clause, wherein the composition comprises from about 1.5 wt% to about 2.5 wt% niobium.
5. The composition according to any preceding clause, wherein the composition comprises from about 4.0 wt% to about 5.0 wt% aluminum, from about 1.0 wt% to about 1.75 wt% iron, and from about 1.5 wt% to about 2.5 wt% niobium.
6. The composition according to any preceding clause, comprising:
   from about 17 wt% to about 19 wt% chromium;
   from about 4.0 wt% to about 5.0 wt% aluminum;
   from about 1.0 wt% to about 1.75 wt% iron;
   from about 10 wt% to about 11 wt% cobalt;
   from about 0.5 wt% to about 1.0 wt% molybdenum;
   from about 0.05 wt% to about 0.10 wt% carbon;
   from about 0.5 wt% to about 1.0 wt% titanium;
   from about 1.0 wt% to about 2.0 wt% tungsten;
   from about 1.5 wt% to about 2.5 wt% niobium;
   less than about 0.25 wt% hafnium; and
   balance nickel and incidental impurities.
7. The composition according to any preceding clause, consisting of:
   from about 17 wt% to about 19 wt% chromium;
   from about 4.0 wt% to about 5.0 wt% aluminum;
   from about 1.0 wt% to about 1.75 wt% iron;
   from about 10 wt% to about 11 wt% cobalt;
   from about 0.5 wt% to about 1.0 wt% molybdenum;
   from about 0.05 wt% to about 0.10 wt% carbon;
   from about 0.5 wt% to about 1.0 wt% titanium;
   from about 1.0 wt% to about 2.0 wt% tungsten;
   from about 1.5 wt% to about 2.5 wt% niobium;
   less than about 0.25 wt% hafnium; and
   balance nickel and incidental impurities.
8. The composition according to any preceding clause, wherein the composition has a gamma prime solvus temperature of from about 1700 °F to about 2100 °F.
9. The composition according to any preceding clause, wherein the composition has a gamma prime solvus temperature of from about 1900 °F to about 2050 °F.
10. The composition according to any preceding clause, wherein the composition has a gamma prime volume fraction of from about 40% to about 75%.
11. The composition according to any preceding clause, wherein the composition has a gamma prime volume fraction of from about 45% to about 70%.
12. The composition according to any preceding clause, wherein the composition is at least one of a welding composition, an additive manufacturing composition, a metal casting composition, a coating composition, and a repair composition.
13. A method of using a composition, the composition comprising:
   from about 16 wt% to about 21 wt% chromium;
   from about 3.5 wt% to about 6.0 wt% aluminum;
   from about 0.5 wt% to about 1.95 wt% iron;
   from about 9 wt% to about 12 wt% cobalt;
   from about 0.5 wt% to about 1.5 wt% molybdenum;
   from about 0.03 wt% to about 0.18 wt% carbon;
   from about 0.5 wt% to about 1.5 wt% titanium;
   from about 0.5 wt% to about 2.5 wt% tungsten;
   from about 1.0 wt% to about 3.5 wt% niobium;
   less than about 0.25 wt% hafnium; and
   balance nickel and incidental impurities,
   wherein the method comprises using the composition for a purpose selected from the group consisting of welding, additive manufacturing, metal casting, coating, repairing, powder metallurgy, and combinations thereof.
14. The method according to the preceding clause, wherein the composition comprises from about 4.0 wt% to about 5.0 wt% aluminum, from about 1.0 wt% to about 1.75 wt% iron, and from about 1.5 wt% to about 2.5 wt% niobium.
15. The method according to any preceding clause, wherein the composition has a gamma prime solvus temperature of from about 1700 °F to about 2100 °F.
16. An article comprising a composition, the composition comprising:
   from about 16 wt% to about 21 wt% chromium;
   from about 3.5 wt% to about 6.0 wt% aluminum;
   from about 0.5 wt% to about 1.95 wt% iron;
   from about 9 wt% to about 12 wt% cobalt;
   from about 0.5 wt% to about 1.5 wt% molybdenum;
   from about 0.03 wt% to about 0.18 wt% carbon;
   from about 0.5 wt% to about 1.5 wt% titanium;
   from about 0.5 wt% to about 2.5 wt% tungsten;
   from about 1.0 wt% to about 3.5 wt% niobium;
   less than about 0.25 wt% hafnium; and
   balance nickel and incidental impurities.
17. The article according to the preceding clause, wherein the article is a blade of a gas turbine or a squealer tip of a blade of a gas turbine.
18. The article according to any preceding clause, wherein the article is a component of a gas turbine selected from the group consisting of a nozzle, a shroud, a diaphragm, a combustor component, and a combination thereof.
19. The article according to any preceding clause, wherein the article is produced with a technique selected from the group consisting of welding, additive manufacturing, metal casting, coating, repairing, powder metallurgy, and combinations thereof.
20. The article according to any preceding clause, wherein the composition comprises from about 4.0 wt% to about 5.0 wt% aluminum, from about 1.0 wt% to about 1.75 wt% iron, and from about 1.5 wt% to about 2.5 wt% niobium.

References to "some embodiments" in the above description are not intended to be interpreted as excluding the existence of additional embodiments that also incorporate the recited features.

### EXAMPLES

Without further elaboration, it is believed that one skilled in the art using the preceding description can utilize the present invention to its fullest extent. The following Examples are, therefore, to be construed as merely illustrative, and not limiting of the disclosure in any way whatsoever. The starting material for the following Examples may not have necessarily been prepared by a particular preparative run whose procedure is described in other Examples. It also is understood that any numerical range recited herein includes all values from the lower value to the upper value. For example, if a range is stated as 10-50, it is intended that values such as 12-30, 20-40, or 30-50, etc., are expressly enumerated in this specification. These are only examples of what is specifically intended, and all possible combinations of numerical values between and including the lowest value and the highest value enumerated are to be considered to be expressly stated in this application.

### Example 1. Simulated composition.

The phase diagram of a composition according to the present disclosure was simulated. The elemental composition of inventive example E1 is shown in the below table.

**Table 1. Simulated composition.**

| Element | IE1 (Wt%) |
|---|---|
| Cr | 18.5 |
| Co | 10.5 |
| Al | 4.55 |
| Ti | 0.75 |
| Fe | 1.58 |
| C | 0.095 |
| Mo | 0.75 |
| W | 1.25 |
| Hf | 0.1 |
| Nb | 2.18 |
| Ni | balance |
| Total | 100 |

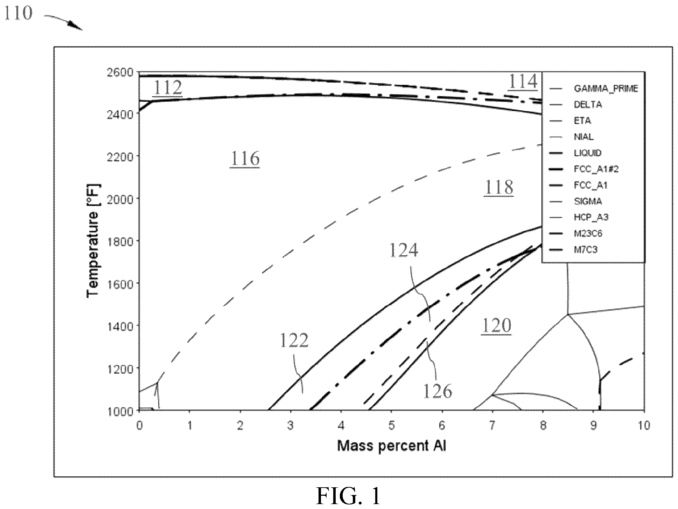

The phase diagram 110 is shown in Figure 1. This phase diagram was simulated with Thermo-Calc software based on chemical composition.

In Figure 1, region 112 is the combined phase for FCC A1 and liquid, region 114 is the phase for liquid, region 116 is the combined phase for FCC A1 and FCC A1#2, region 118 is the combined phase for FCC A1 and FCC A1#2 and gamma prime, region 120 is the combined phase for FCC A1 and gamma prime and M23C6, region 122 is the combined phase for FCC A1 and FCC A1#2 and gamma prime and M7C3, region 124 is the combined phase for FCC A1 and gamma prime and M7C3, and region 126 is the combined phase for FCC A1 and gamma prime and M23C6 and M7C3.

### Example 2. Tested compositions.

A composition according to inventive example E1 was prepared and its properties were measured. It was determined that inventive example E1 had a gamma prime volume fraction of about 52% and a gamma prime solvus temperature of about 2011 °F.

### Example 3. Metallurgical evaluation.

A composition according to inventive example E1 was prepared and tested as a welding filler metal. A weld pad was created with the composition. The weld pad included four layers and was 4.0" long and 1.5" wide. The weld pad passed visual and fluorescent penetrant inspection (FPI) in the as-welded and post weld heat treatment (PWHT) conditions.

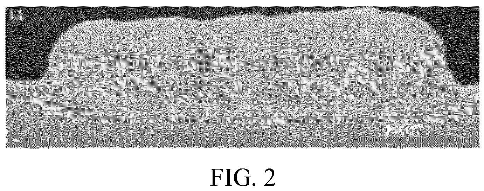

Figure 2 depicts the weld pad. Surprisingly, the evaluated composition could produce uniform welding beads without cracks and/or microfissures.

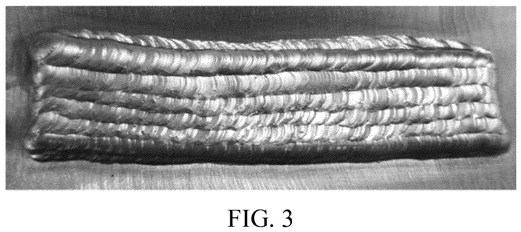

Figure 3 depicts the results of a welding test. Surprisingly, no cracks or fissures were observed in the welding materials after thermal shock PWHT at 2050 °F and holding for 2 hours, followed by fast quench, which means that the compositions show excellent weldability.

It was surprisingly discovered in the present disclosure that compositions according to the present disclosure could be used for welding. The compositions exhibit excellent weldability, excellent castability, excellent oxidization resistance due to higher Al content, good mechanical properties, high gamma prime volume fractions, and high gamma prime solvus temperatures. Compositions according to the present disclosure are broadly applicable in applications requiring superalloys, including welding, additive manufacturing, metal casting, coating, repairing, powder metallurgy, and combinations thereof.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Accordingly, a value modified by a term or terms such as "about," "approximately," and "substantially" is not to be limited to the precise value specified. In at least some instances, the approximating language may correspond to the precision of an instrument for measuring the value. Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

Although specific features of various embodiments of the invention may be shown in some drawings and not in others, this is for convenience only. Moreover, references to "some embodiments" in the above description are not intended to be interpreted as excluding the existence of additional embodiments that also incorporate the recited features. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A composition comprising:
from about 16 wt% to about 21 wt% chromium;
from about 3.5 wt% to about 6.0 wt% aluminum;
from about 0.5 wt% to about 1.95 wt% iron;
from about 9 wt% to about 12 wt% cobalt;
from about 0.5 wt% to about 1.5 wt% molybdenum;
from about 0.03 wt% to about 0.18 wt% carbon;
from about 0.5 wt% to about 1.5 wt% titanium;
from about 0.5 wt% to about 2.5 wt% tungsten;
from about 1.0 wt% to about 3.5 wt% niobium;
less than about 0.25 wt% hafnium; and
balance nickel and incidental impurities.

2. The composition of claim 1, wherein the composition comprises from about 4.0 wt% to about 5.0 wt% aluminum.

3. The composition of claim 1, wherein the composition comprises from about 1.0 wt% to about 1.75 wt% iron.

4. The composition of claim 1, wherein the composition comprises from about 1.5 wt% to about 2.5 wt% niobium.

5. The composition of claim 1, wherein the composition comprises from about 4.0 wt% to about 5.0 wt% aluminum, from about 1.0 wt% to about 1.75 wt% iron, and from about 1.5 wt% to about 2.5 wt% niobium.

6. The composition of claim 1, comprising:
from about 17 wt% to about 19 wt% chromium;
from about 4.0 wt% to about 5.0 wt% aluminum;
from about 1.0 wt% to about 1.75 wt% iron;
from about 10 wt% to about 11 wt% cobalt;
from about 0.5 wt% to about 1.0 wt% molybdenum;
from about 0.05 wt% to about 0.10 wt% carbon;
from about 0.5 wt% to about 1.0 wt% titanium;
from about 1.0 wt% to about 2.0 wt% tungsten;
from about 1.5 wt% to about 2.5 wt% niobium;
less than about 0.25 wt% hafnium; and
balance nickel and incidental impurities.

7. The composition of claim 1, consisting of:
from about 17 wt% to about 19 wt% chromium;
from about 4.0 wt% to about 5.0 wt% aluminum;
from about 1.0 wt% to about 1.75 wt% iron;
from about 10 wt% to about 11 wt% cobalt;
from about 0.5 wt% to about 1.0 wt% molybdenum;
from about 0.05 wt% to about 0.10 wt% carbon;
from about 0.5 wt% to about 1.0 wt% titanium;
from about 1.0 wt% to about 2.0 wt% tungsten;
from about 1.5 wt% to about 2.5 wt% niobium;
less than about 0.25 wt% hafnium; and
balance nickel and incidental impurities.

8. The composition of claim 1, wherein the composition has a gamma prime solvus temperature of from about 1700 °F to about 2100 °F, or from about 1900 °F to about 2050 °F.

9. The composition of claim 1, wherein the composition has a gamma prime volume fraction of from about 40% to about 75%, or from about 45% to about 70%.

10. The composition of claim 1, wherein the composition is at least one of a welding composition, an additive manufacturing composition, a metal casting composition, a coating composition, and a repair composition.

11. An article comprising a composition, the composition comprising:
from about 16 wt% to about 21 wt% chromium;
from about 3.5 wt% to about 6.0 wt% aluminum;
from about 0.5 wt% to about 1.95 wt% iron;
from about 9 wt% to about 12 wt% cobalt;
from about 0.5 wt% to about 1.5 wt% molybdenum;
from about 0.03 wt% to about 0.18 wt% carbon;
from about 0.5 wt% to about 1.5 wt% titanium;
from about 0.5 wt% to about 2.5 wt% tungsten;
from about 1.0 wt% to about 3.5 wt% niobium;
less than about 0.25 wt% hafnium; and
balance nickel and incidental impurities.

12. The article of claim 11, wherein the article is a blade of a gas turbine or a squealer tip of a blade of a gas turbine.

13. The article of claim 11, wherein the article is a component of a gas turbine selected from the group consisting of a nozzle, a shroud, a diaphragm, a combustor component, and a combination thereof.

14. The article of claim 11, wherein the article is produced with a technique selected from the group consisting of welding, additive manufacturing, metal casting, coating, repairing, powder metallurgy, and combinations thereof.

15. The article of claim 11, wherein the composition comprises from about 4.0 wt% to about 5.0 wt% aluminum, from about 1.0 wt% to about 1.75 wt% iron, and from about 1.5 wt% to about 2.5 wt% niobium.
